# EUROPEAN PATENT SPECIFICATION

(11) **EP 0 454 232 B1**
(45) Date of publication and mention of the grant of the patent: **01.03.1995**
(21) Application number: 91200931.3
(22) Date of filing: 19.04.1991
(51) Int. Cl.: A01C 1/00, A01H 1/04

(54) **Method of determining the hybrid quality of seeds**
Verfahren zum Determinieren der Hybridqualität von Samen
Procédé de détermination de la qualité hybride de semences

(30) Priority: 26.04.1990 NL 9000997
(43) Date of publication of application: 30.10.1991
(73) Proprietor: Proteios B.V., 1681 PA Zwaagdijk (NL)
(72) Inventor: Van den Berg, Bartel Marinus, NL-1602 ML Enkhuizen (NL)
(74) Representative: Kupecz, Arpad

(56) References cited:
- SOVIET INVENTIONS ILLUSTRATED WEEK 8620,30 MEI 1986, DERWENT PUBLICATIONS LTD.LONDON GB. NO 86-130293/20 & SU-A-1186179 (MOSC TEACHING INST) 23 OCT. 1985
- SOVIET INVENTIONS ILLUSTRATED WEEK 9005, 14 MARCH 1990, DERWENT PUBLICATIONS LONDON GB. NO 90-035189/05 & SU-A-1471999 (PLANT PROTECT RES) 15 APRIL 1989
- SOVIET INVENTIONS ILLUSTRATED WEEK 8911, 26 APRIL 1989, DERWENT PUBLICATIONS LONDON GB, NO 89-084001/11 & SU-A-1423070 (KAZA SOIL SCI RES) 7 SEPT. 1988

## Description

The present invention relates to a method of determining the hybrid quality of seeds wherein seed proteins at a suitable pH gradient formed by ampholytes or immobilines are separated from each other by means of isoelectric focussing, whereafter the so separated proteins are conventionally coloured and visually detected.

The hybrid quality of seeds is a characteristic of lots of seeds which is particularly important for the seed trade. During the last ten, twenty years the use of hybrid seeds has assumed enormous proportions. In view of the seeds of open pollinated races these seeds of F1 hybrid races offer particular advantages. This is connected with the manner of development and production of hybrid races. In the simplest case one starts from two different parent lines (the male parent which gives the pollen and the female line, which is pollinated and from which finally the seed is gathered) which have been obtained by recombination, selection and in-breeding. By the process of in-breeding or self-fertilizing the parents of hybrids are homozygote for most properties. Because both parents used for producing hybrids, by the process of self-fertilizing are so homogeneous, the hybrid seed finally gathered also will be very homogeneous of genetic composition. The final plant growing from the hybrid seed thus is particularly uniform for properties like morphology, yield, harvest-time, culture method, etc. Besides uniformity hybrid races more often give an extra yield compared with open pollinated races. These advantages of the hybrid races are very important for the buyer of the hybrid seeds (for example, mechanical harvesting is rendered possible by the uniformity of the plant). This also shows the importance of the hybrid quality of the plant. When the motherline of the hybrid by whatever cause becomes self-fertilized this leads to mother seed instead of hybrid seed. Also self-fertilizing of the fatherline can occur and under circumstances seed from the father may be harvested. Self-fertilizing of the motherline leads to in-bred seed in the hybrid seed. This is only to a very small extent acceptable for the buyer of the hybrid seed. Therefore the hybrid quality of seed in practice is determined by a random test. This consists in that one sows a certain number of seeds, lets grow the plants under the right conditions till the full-grown fructiferous stage and subsequently carries out a detailed analysis of all properties of the hybrid plants. Since the hybrid is a "sum" of both parents and the parents mostly differ in properties such analysis will produce a reliable result. This method, however, is time consuming and costly. Because the data relative to the hybrid quality of the seed take a long time (some months) to be obtained the seed cannot be sold directly after harvesting. This means that the seed in many cases must be stored for a quite long time, even longer than a year, with all the attendant costs. This not only causes extra costs by storing per se but also by loss of quality, the missing of sales possibilities and a more difficult planning of subsequent productions.

A more modern method of determining the hybrid quality of seeds using isoelectric focussing is known from the article of R.J. Cooke and S.R. Draper in J. natn.Inst.agric. Bot.,(1983) 16, 173-181. In this article a method is described of using ultrathin layer isoelectric focussing for characterizing seeds wherein the individual seeds are crushed whereafter the crushed seed of parts thereof are extracted in a small volume (100-250 »l) 1,0 M urea with or without 2 volume percent 2.mercapto ethanol (independent of the kinds) in a polypropylene centrifuge tube.

After optional de-greasing the urea solution is treated with Amberlite MB-1, whereafter the finally obtained clear supernatant is used for focussing.

Besides seeds like wheat, oats, lucerne and rapeseed, one can also determine the seed proteins of peas and beans.

A usual technique is to make use of ampholytes for creating the pH-gradient in the gel to enhance the resolution of the proteins.

According to this article the known method has the advantage that an excellent resolution of the seed proteins is obtained in a much quicker way than in the case of the conventional gel electrophorese techniques.

This article does not mention the use of such isoelectric focussing method for determining the hybrid quality of the seeds of horticultural plants like tomatoes, cabbage plants, melons, peppers etc. This article discloses the article : "Evaluation of genetic purity in hybrid corn (Zea Mays L.) seed production through zein isoelectrophoretic patterns".

Surprisingly it has been found that when using the isoelectric focussing technique for seed proteins of tomatoes, cabbage, melons, paprika, peppers etc., such method appeared to be a successful instrument for determining the F1 hybrid purity of such races.

Correspondingly, the present invention comprises a method of determining the hybrid quality of seeds wherein seed proteins at a suitable pH-gradient formed by ampholytes or immobilines are separated from each other by means of isoelectric focussing, whereafter the so separated proteins are conventionally coloured and visually detected, characterized in that the hybrid quality of F1 hybrid seeds of horticultural plants is determined by using the difference between the isoelectric points of mother and father specific seed proteins.

The present invention provides a method of determining the hybrid quality of usually expensive hybrid seeds of horticultural plants very quickly and with less costs.
The method of the invention is based on the analysis of seed proteins from hybrid seeds. Since hybrid seeds have properties which are the sum of the properties of the parents the hybrid seed will contain mother as well as father specific proteins. This analysis can be carried out very quickly and is significantly cheaper than the method used up till now using grown-up plants. Furthermore, the method is more reliable. For the failing of father specific proteins (only seed from the mother is harvested) undeniably indicates that self-fertilizing of the mother has occurred.

The method of the present invention offers a great economic advantage for the seed trade since it allows the trade to determine the F1 hybrid quality of the desired seed much more quickly and thus in a more economic way.

Particularly suitable appeared to be the isoelectric focussing method for determining the hybrid quality of tomatoes using the isoelectric points of mother and father specific proteins which is 7.1 and 6.1 for PRS-1⁺ and PRS-1¹, respectively.

For tomatoes there were two other methods available, i.e. the so-called enzympolymorphy, namely for the enzymes acid phosphatase derived from leaf tissue as well as alcohol dehydrogenase derived from imbibed seed.

To these two known methods the invention adds a third method whereby a quick and reliable hybrid quality determination of tomato seeds is possible.

For the determination of the hybrid quality of cabbage plants use is made of the mother and father specific proteins which are water-soluble PRS-1 proteins with an isoelectric point of 6.4 and 7.4 for PRS-1⁺ and PRS-1¹, respectively.

Also in the case of cabbage plants like tomatoes the invention adds a new, quick and reliable hybrid quality determination method to the existing methods.

It is noted that in the case of melons and peppers up till now there was no method available for the determination of the hybrid quality of the seeds thereof.

Surprisingly, it has appeared that the method of the invention is particularly suitable for the determination of the hybrid quality of melons as well as peppers.

In determining the hybrid quality of melons use is made of the mother and father specific PRS proteins, which are water soluble proteins with an isoelectric point of 5.7, 5.8, 5.9, 6.0, 7.0, 8.5, 8.6, 8.7 and proteins soluble in 8M urea with an isoelectric point of 5.3, 5.4, 5.5, 5.6, 6.1, 6.5, 8.9, 9.0, 9.7, 9.9.

When the hybrid quality of peppers should be determined use is made of the mother and father specific PRS-1 proteins soluble in 8 M urea with an isoelectric point of 4.0 and 5.2 for PRS-1⁺ and PRS-1-¹, respectively.

In general the procedure of the present method contains crushing or homogenizing seed coming from a lot of seed, of which one wishes to determine the hybrid quality, in a certain liquid of which water is the main component, in which liquid the proteins are solved. A certain fraction of the liquid is brought on a gel whereafter the separation of the proteins takes place by means of isoelectric focussing. After the separation the detection of the father and mother specific proteins takes place by means of a suitable colouring agent or silver nitrate. The location of the mother and father specific proteins in the gel is determined experimentally. When in the tomato-seed, for example, both, i.e. mother and father specific proteins are present, which may be derived from the isoelectric points of the mother and father specific proteins from the seed extract, it may be said that we have to do here with a F1 hybrid in which the properties of the mother as well as the father are present.

So with tomatoes, for example, use is made of two proteins, i.e. with an isoelectric point of 7.1 and 6.1, respectively, encoded by the allenes Prs-1⁺ and PRS-1¹ respectively.

This method is based on genetic variation for the gen Prs-1. This gen therefore encodes two proteins PRS-1⁺ and PRS-1¹.

The virtue of the isoelectric focussing for the determination of in-breeding lies in that the detection is independent on environmental conditions. Also in successive generations the genes will remain in the parent lines.

As mentioned before, the present method is particularly suited for the determination of the hybrid purity of seeds of horticultural plants like, for example, the just mentioned
tomatoes, melons, peppers, cabbage plants, but also aubergines, gherkin, courgettes, cucumbers, radish etc.

In isoelectric focussing there arise in a gel electrophorese patterns which are interpreted as follows. By the pattern one examines which seeds are F1 hybrid pure and which are not. With the F1 hybrid the characteristic bands of mother and father are to be found back. If in the reference pattern the father specific band fails the seed is not hybrid pure. When we suppose that one hundred seeds are examined which are taken along in the isoelectric focussing pattern, all hundred, with tomatoes, will have to be pure, should there be question of a good seed quality for a certain lot. Should one not be pure, such a lot is less desired. In general the price of a seed is primarily determined by the degree of hybrid purity. The desired degree of hybrid purity and the relation between price is different from plant to plant. With tomatoes, for example, high requirements are put on the hybrid purity. With cabbage plants the tolerances are usually greater and one finds that hybrid impurity of some percents with cabbage plants is acceptable. Furthermore, it is important whether there is question of cauliflower, white cabbage, red cabbage etc.

The invention is now explained by the following figures wherein
Fig. 1 illustrates an isoelectric focussing pattern for tomato F1 hybrid Bornia,
Fig. 2 illustrates an isoelectric focussing pattern for cauliflower F1 hybrid Plana, and
Fig. 3 is a schematic representation of the hybrid quality determination or in-breeding determination of seeds by isoelectric focussing.

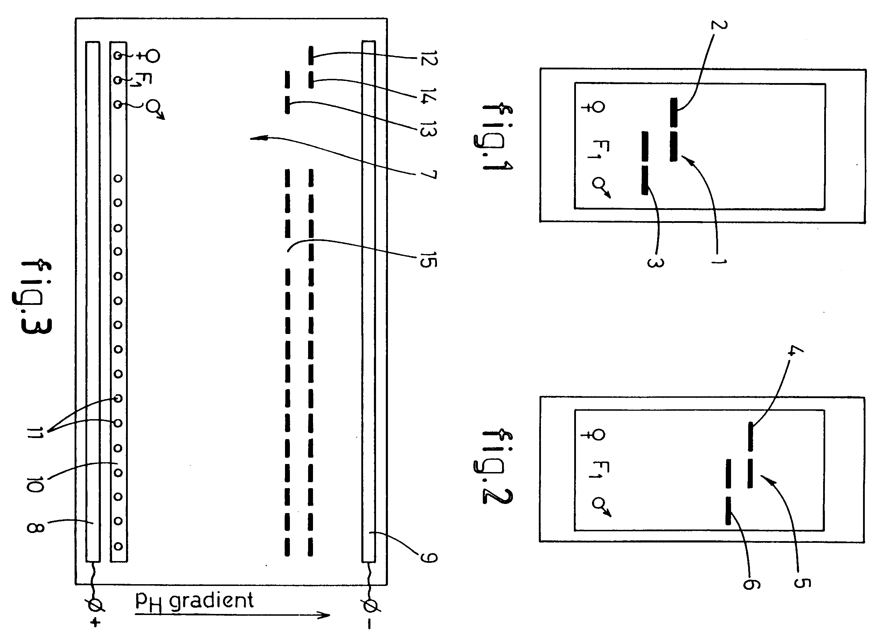

In fig. 1 is illustrated the F1 hybrid pattern for the tomato Bornia as obtained by isoelectric focussing wherein the band for the father specific protein 3 and the band for the mother specific protein 2 are represented.

In fig. 2 is illustrated the F1 hybrid pattern for the cauliflower Plana as obtained by isoelectric focussing wherein the father specific band 6 and the mother specific band 4 are present.

In fig. 3 is schematically illustrated the determination of the hybrid quality, also called in-breeding determination, of a lot of seeds by isoelectric focussing. Use is made of a gel plate 7 provided with a positive electrode 8 and a negative electrode 9. Just above the positive electrode there is a rubber sample collecting strip 10 provided with cavities 11. Furthermore, mother specific and father specific protein bands 12 and 13, respectively, are illustrated as well as a F1 hybrid pattern 14 wherein the mother and father specific protein bands are present.

In the in-breeding determination of a lot of seeds an aqueous protein solution of one seed at a time from the lot of seeds is transferred into a cavity 11 of the sample collecting strip 10.

Then, a protein solution of a seed is taken wherein only mother specific proteins are present and such one of a seed wherein only father specific proteins are present and finally such one of a F1 hybrid wherein both kinds of protein are present. When applying the desired potential difference between the positive and negative electrodes 8 and 9 at a certain pH gradient and after colouring with a suitable colouring agent or silver nitrate the protein pattern as illustrated in fig. 3 is obtained. In the first three cavities from left to right are disposed the mother specific, F1 hybrid and father specific protein solutions, respectively, and in the other cavities the protein solutions of the seeds, of which the hybrid quality, i.e. the in-breeding, is to be determined. The mother and father specific proteins also are called marker proteins. Should one of the marker proteins fail, such as at 15, for example, (at 15 fails the father specific protein) then there is a question of in-breeding.

In this manner the hybrid quality of all kinds of F1 hybrid seeds of horticultural plants can be determined, among which that of tomatoes, cabbage plants, peppers, melons etc.

In the method of the invention usually water is used which has been purified by the Milli-Q system (Millipore, Bedford, USA).

Furthermore, use is made of: acrylamide, bisacrylamide, cathod liquid 10 (on the basis of arginine, lysine and ethylene diamine), ampholytes (servalyt pH 6-9), Coomassie Brilliant Blue R-250 (Serva Blue R), kerosine and pI protein kit (range 3.6-9.6) from Serva (Heidelberg, Federal Republic of Germany); acetic acid, glycine, glycerol, pI protein kit (range 5.65 - 8.3) and TCA from BDH (Poole, United Kingdom).

The gel fixation used according to the invention for coatings and gel fixation for PAGE (265 x 193 mm) and electrode strips (300 x 6 x 1 mm) come from Serva (Heidelberg, Federal Republic of Germany). Flat bottom microtiter plates with 96 cavities come from Costar (Cambridge, USA). Adhesive tape (tesa, 100 »m) was from Beun de Ronde (Abcoude, The Netherlands).

The ultra thin layer isoelectric focussing used in accordance with the invention, shortened UTLIEF, is a known method proceeding in this way. First, gels are prepared.

UTLIEF gels were prepared in accordance with the "flap" technique as described by Radola. Adhesive tape is used as distance strip along each side of the gel fixation film (265 mm x 193 mm). Using three electrodes two gels of the dimension 250 x 90 mm could be operational at a time. The gelifixation and coating films were rolled out on glass plates with a few drops of water between the glass plate and the film. The polymerisation mix contained 1.32 ml acrylamide (30% mono weight by v, 3% bis weight by v); 5.72 ml 16% glycerol; 0.6 ml ampholytes of the desired pH range; 0.4 ml 1.5% ammonium persulphate. The final acrylamide concentration was 5%. This mixture was strongly degassed on a vacuum conduit during 3 min. After "flapping" and polymerisation the gels were used directly (after at least 1 hour) or stored at 4°C during no more than a week.

The invention is explained by the following non-limiting examples.

### Example I

Tomato seeds were transferred into microtiterplates (96 cavities with a volume of 380 »L, in each cavity a seed) and the cavities were filled with 80 »L 5mM NaCl solution (4°C). The seeds were homogenized using a self-made device attached to a drilling machine. Of the so obtained homogenous protein solutions a certain quantity was brought with a micro-pipet to the gel surface using a sample collecting strip provided with a number of cavities. The collecting strip is at a distance of about 5 mm from the anode. Then, the isoelectric focussing is done as follows.

Use was made of a Desaga electrophorese device (DESAPHOR HE 200) provided with a cooled plate of 200 x 265 x 1 mm connected to a Pharmacia constant current supply ECPS 3000/150 and a Lauda RC3 cooling device (at a temperature of 10°C). The gels were laid on the cooling plate with a few drops of kerosine to insure good contact. The electrode strips were soaked in 0.5 M glycine (anode strips) and cathode liquid 10 (cathode strips). The electrodes were placed on the strips and therafter covered by a glass plate to insure good electrical contact. Prefocussing was done with a setting of 10 W, 2000 V and 12 mA. The prefocussing started at about 240 V and 3.5 W until the tension reached about 800 V (15 - 20 min). After applying the samples the focussing was continued with the same settings for 3000 Vh (80 - 90 min). Then, the protein colouring was realized as follows.

After focussing, the gels were soaked in 20% TCA during 5 min.; subsequently, the gels during 10 min. were incubated in a colouring solution (0.05% Serva Blue R in decolouring solution; Serva Blue R firstly was solved in 10 mL methanol). The gels were decoloured in three washings during 5 min. with a decolouring solution (10% acetic acid; 40% methanol; 50% water; v/v/v), until the background colouring was completely removed. After flushing with water the gels were dried in the air and stored.

### Nomenclature

A symbol for the protein subject of this study is chosen in accordance with the rules of the Tomato Genetic Cooperative. The protein is designated with three capitals and a number: PRS-1 means protein for seed . This number is given since genetic variants of other seed proteins have been found (of which no results have been published). The variety Marglobe chosen as reference contains the allel Prs-1⁺ (designated in cursive with a capital and a small letter), that is the code for the protein PRS-1⁺ (the protein with pI = 7.1). Other allels and their coded proteins will be numbered: the open pollinated variety Moneymaker has the allel Prs-1¹, which is the code for the protein PRS-1¹ (the protein with pI = 6.1).

### Results

Detection and isoelectric focussing variation of the PRS-1 proteins.

An isoelectric focussing study of the water soluble proteins of seeds of open pollinated tomato varieties by UTLIEF in the range of pH 6-9 showed besides many other bands two variable protein bands. The variable protein in the designated variety Marglobe is called PRS-1⁺ (see nomenclature) and the other variant found in the open pollinated varieties Moneymaker and Napoli is designated with PRS-1¹.

The isoelectric points, i.e. pI's of both proteins were estimated using reference proteins with known pI under standard electrophoretic conditions. The pI's for PRS-1⁺ and PRS-1¹ appear to be 7.1 and 6.1, respectively.

The intensity of the PRS-1 band as a result of the UTLIEF analysis of the raw extract of one tomato seed was too low for a good routine detection of the PRS-1 variant. This was even more so the case for plants which contain both PRS-1 variants. Furthermore, the PRS-1¹ protein tends to precipitate near its isoelectric point. Therefore, several possibilities were examined to insure a reliable detection of the PRS-1⁺ protein. The use of urea and a high salt concentration in the sample buffer resulted in the appearance of numerous proteins in the gel, which rendered an unambiguous identification of the PRS-I proteins impossible. The use of a sample buffer with a low ionogeneous strength resulted in a better solubility of the PRS-1 proteins and in a better stability of the PRS-1⁺ variant around its pI during isoelectric focussing.

### Example II

Following the procedure of example I the F1 hybrid quality of cabbage plants was determined making use of the mother and father specific proteins with an isoelectric point of 6.7 and 7.4 for PRS-1⁺ and PRS-1¹, respectively. Seeds were ground dependent on size, in 80 to 150 »l water. The pH gradient was 6-9. The colouring was with silver nitrate as described by Merrill.

### Example III

Using the procedure of example I the hybrid quality of melons was determined. Herein use was made of the mother and father specific PRS proteins, soluble in water with an isoelectric point of 5.7, 5.8, 5.9, 6.0, 7.0, 8.5, 8.6, 8.7. Furthermore, use was made of proteins soluble in 8M urea with an isoelectric point of 5.3, 5.4, 5.5, 5.6, 6.1, 6.5, 8.9, 9.0, 9.7, 9.9. Seeds were ground in 1 ml liquid in flat bottom microtiterplates (26 cavities, 3,8 ml contents) in 8M urea. Colouring with Coomassie or silver nitrate. Various pH gradients were used.

### Example IV

Following the procedure of example I the hybrid quality of peppers was determined using the mother and father specific proteins in 8M urea with an isoelectric point of 4.0 and 5.2 for PRS-1⁺ and PRS-1¹, respectively. Seeds were ground in 100 »l 8M urea. The pH gradient was 3-6. Colouring with Coomassie.

It will be clear that the invention is not limited to the above mentioned examples, but that using the procedure of example I also the hybrid quality of other horticultural plants, like aubergines, gherkins, courgettes, cucumbers, radish etc. can be rapidly and reliably determined.

## Claims

1. Method of determining the hybrid quality of seeds wherein seed proteins at a suitable pH gradient formed by ampholytes or immobilines are separated from each other by means of isoelectric focussing, whereafter the so separated proteins are conventionally coloured and visually detected, **characterized** in that the hybrid quality of F1 hybrid seeds of horticultural plants is determined by using the difference between the isoelectric points of mother and father specific seed proteins.

2. Method of claim 1, **characterized** in that the hybrid quality of tomatoes is determined wherein the isoelectric point of mother and father specific proteins is 7.1 and 6.1 for PRS-1⁺ and PRS-1, respectively.

3. Method of claim 1, **characterized** in that the hybrid quality of cabbage plants is determined wherein mother and father specific proteins are water soluble PRS-1 proteins with an isoelectric point of 6.4 and 7.4 for PRS-1⁺ and PRS-1¹, respectively.

4. Method of claim 1, **characterized** in that the hybrid quality of melons is determined wherein the mother and father specific PRS proteins are water soluble proteins with an isoelectric point of 5.7, 5.8,, 5.9., 6.0, 7.0, 8.5, 8.6, 8.7 and proteins soluble in 8M urea with an isoelectric point of 5.3, 5.4, 5.5, 5.6, 6.1, 6.5, 8.9, 9.0, 9.7, 9.9.

5. Method of claim 1, **characterized** in that the hybrid quality of peppers is determined wherein the mother and father specific proteins are PRS-1 proteins soluble in 8M urea with an isoelectric point of 4.0 and 5.2 for PRS-1⁺ and PRS-1¹, respectively, and mother and father specific proteins with an isoelectric point of 5.75, 5.30, 5.20, 4.8.

6. Method of claim 1, **characterized** in that the hybrid quality of courgettes is determined wherein the mother and father specific proteins are proteins soluble in 8M urea with an isoelectric point of 5.2 and 5.3.

## Patentansprüche

1. Verfahren zur Bestimmung der Hybridqualität von Samen, bei dem Samenproteine bei einem geeigneten durch Ampholyte oder Immobiline erzeugten pH-Gradienten voneinander mittels dielektrischer Fokussierung getrennt werden, wonach die so getrennten Proteine in herkömmlicher Weise gefärbt und visuell erfaßt werden, **dadurch gekennzeichnet,** daß die Hybridqualität von F1-Hybridsamen von Gemüsepflanzen bestimmt wird durch Verwendung der Differenz zwischen den isoelektrischen Punkten von mutter- und vaterspezifischen Samenproteinen.

2. Verfahren nach Anspruch 1, **dadurch gekennzeichnet,** daß die Hybridqualität von Tomaten bestimmt wird, wobei der isoelektrische Punkt von mutter- und vaterspezifischen Proteinen 7,1 und 6,1 für PRS-1⁺ bzw. PRS-1¹ ist.

3. Verfahren nach Anspruch 1, **dadurch gekennzeichnet,** daß die Hyblidqualität von Kohl bestimmt wird, wobei mutter- und vaterspezifische Proteine wasserlösliche PRS-1-Proteine mit einem isoelektrischen Punkt von 6,4 und 7,4 für PRS-1⁺ bzw. PRS-1¹ sind.

4. Verfahren nach Anspruch 1, **dadurch gekennzeichnet,** daß die Hybridqualität von Melonen bestimmt wird, wobei die mutter- und vaterspezifischen PRS-Proteine wasserlösliche Proteine mit einem isoelektrischen Punkt von 5,7, 5,8, 5,9, 6,0, 7,0, 8,5, 8,6, 8,7 und in 8M Harnstoff lösliche Proteine mit einem isoelektrischen Punkt von 5,3, 5,4, 5,5, 5,6, 6,1, 6,5, 8,9, 9,0, 9,7, 9,9 sind.

5. Verfahren nach Anspruch 1, **dadurch gekennzeichnet,** daß die Hybridqualität von Paprika oder Chili bestimmt wird, wobei die mutter- und vaterspezifischen Proteine in 8M Harnztoff lösliche PRS-1-Proteine mit einem isoelektrischen Punkt von 4,0 und 5,2 für PRS-1⁺ bzw. PRS-1¹ und mutter- und vaterspezifische Proteinen mit einem isoelektrischen Punkt von 5,75, 5,30, 5,20, 4,8 sind.

6. Verfahren nach Anspruch 1, **dadurch gekennzeichnet,** daß die Hybridqualität von Zucchini bestimmt wird, wobei die mutter- und vaterspezifischen Proteine in 8M Harnstoff lösliche Proteine mit einem isoelektrischen Punkt von 5,2 und 5,3 sind.

## Revendications

1. Procédé pour la détermination de le qualité hybride de semences, dans lequel on sépare entre elles par focalisation isoélectrique les protéines de semences à un gradient de pH approprié, formées par des ampholytes ou des immobilines, après quoi les protéines ainsi séparées sont de façon classique colorées et détectées visuellement, procédé caractérisé en ce que l'on détermine la qualité hybride des semences hybrides F1 de plantes horticoles en utilisant la différence entre les points isoélectriques des protéines de semences spécifiques mère et père.

2. Procédé selon la revendication 1, caractérisé en ce que l'on détermine la qualité hybride des tomates, le point isoélectrique des protéines spécifiques mère et père étant respectivement de 7,1 et 6,1 pour PRS-1⁺ et PRS-1.

3. Procédé selon la revendication 1, caractérisé en ce que l'on détermine la qualité hybride des choux, procédé dans lequel les protéines spécifiques mère et père sont des protéines PRS-1 hydrosolubles avec un point isoélectrique respectivement de 6,4 et 7,4 pour PRS-1⁺ et PRS-1¹.

4. Procédé selon la revendication 1, caractérisé en ce que l'on détermine la qualité hybride des melons, procédé dans lequel les protéines PRS spécifiques mère et père sont des protéines hydrosolubles avec un point isoélectrique de 5,7; 5,8; 5,9; 6,0; 7,0; 8,5; 8,6; 8,7 et des protéines solubles dans l'urée 8M avec un point isoélectrique de 5,3; 5,4; 5,5; 5,6; 6,1; 6,5; 8,9; 9,0; 9,7; 9,9.

5. Procédé selon la revendication 1, caractérisé en ce que l'on détermine la qualité hybride des poivrons, procédé dans lequel les protéines spécifiques mère et père sont des protéines PRS-1 solubles dans l'urée 8M avec un point isoélectrique respectivement de 4,0 et 5,2 pour PRS-1⁺ et PRS-1¹, et les protéines spécifiques mère et père avec un point isoélectrique de 5,75; 5,30; 5,20; 4,8.

6. Procédé selon la revendication 1, caractérisé en ce que l'on détermine la qualité hybride des courgettes, procédé dans lequel les protéines spécifiques mère et père sont des protéines solubles dans l'urée 8M avec un point isoélectrique de 5,2 et 5,3.
